(19) Europäisches Patentamt
European Patent Office
Office européen des brevets

(11) EP 1 843 288 A1

(12) DEMANDE DE BREVET EUROPEEN

(43) Date de publication:
10.10.2007 Bulletin 2007/41

(51) Int Cl.:
*G06Q 20/00* (2006.01)

(21) Numéro de dépôt: 06405145.1

(22) Date de dépôt: 05.04.2006

(84) Etats contractants désignés:
AT BE BG CH CY CZ DE DK EE ES FI FR GB GR HU IE IS IT LI LT LU LV MC NL PL PT RO SE SI SK TR
Etats d'extension désignés:
AL BA HR MK YU

(71) Demandeur: Elca Informatique S.A.
1000 Lausanne 13 (CH)

(72) Inventeurs:
• Bost, Jean-Marc
1226 Thônex (CH)
• Ferro, Marco
1004 Lausanne (CH)
• Gorostidi, Daniel
1024 Ecublens (CH)

(74) Mandataire: Reuteler, Raymond Werner
Reuteler & cie SA
Chemin de la Vuarpillière 29
1260 Nyon (CH)

(54) **Sécurisation de transactions électroniques sur un réseau ouvert**

(57) Un procédé de sécurisation de transactions électroniques entre un poste utilisateur muni d'un programme navigateur de réseau, et un système serveur sécurisé d'une ou plusieurs contreparties à la transaction, comprenant les étapes de :
- soumission de l'ordre de transaction par l'utilisateur au système de serveur sécurisé ;
- génération dans le système serveur sécurisé d'un reçu visualisable sur le poste utilisateur, intégrant des données de la transaction ainsi qu'un défi indissociable de la transaction ;
- sécurisation visuelle et/ou signature électronique du reçu dans le système serveur sécurisé pour lier définitivement le code à usage unique aux détails de la transaction;
- envoi du reçu visualisable et d'un formulaire ou champ de réponse au défi au poste de l'utilisateur ; et
- vérification dans le système serveur sécurisé de la réponse au défi retournée par l'utilisateur.

Fig. 7

**Description**

La présente invention concerne un procédé de sécurisation de transactions électroniques effectuées sur un réseau ouvert, notamment un réseau global ouvert, tel qu'Internet.

La plupart des transactions électroniques effectuées par la voie Internet sont sécurisées avec un procédé d'authentification renforcée de l'utilisateur et avec le cryptage des données échangées entre l'utilisateur et le serveur d'un fournisseur, d'une banque ou d'une autre partie à la transaction. Ces moyens ne permettent pas de garantir qu'une transaction, telle qu'un virement bancaire, ne puisse être interceptée et modifiée à la volée par un intermédiaire malveillant ou non autorisé. Une personne malveillante (« hacker ») peut par exemple lire, transformer ou dévier les données échangées entre le poste de l'utilisateur et le serveur du fournisseur, ou un programme du type « cheval de Troie » peut réaliser les mêmes méfaits entre l'interface utilisateur (clavier, écran) et le logiciel navigateur du poste de l'utilisateur.

Les systèmes d'authentification renforcée permettent à un utilisateur de « signer la transaction » : i.e., de prouver qu'il est bien l'auteur de la demande en fournissant un code à usage unique (qui ne peut pas être réutilisé) pour chaque transaction. Dans certains de ces systèmes, l'utilisateur obtient le code en réponse à un défi envoyé par le serveur du fournisseur, en lisant une carte personnelle à grille ou en manipulant un calculateur personnel. De tels procédés de défi-réponse pour l'authentification d'un utilisateur ou pour la validation d'une transaction sont décrits par exemple dans les publications US 2005 075973, US 2004 059952, EP 1338940, US 2001 044896, US 5060263, GB 2120434 et US 2005 246524.

Les systèmes d'authentification existants ne permettent pas d'assurer la validité d'une transaction si les données échangées entre l'utilisateur et son navigateur sont interceptées et manipulées, et notamment si un cheval de Troie parvient à présenter des données de la transaction au serveur du fournisseur qui sont différentes des données entrées par l'utilisateur et que ce dernier visualise sur son poste. Bien qu'il soit difficile de manipuler les données relatives au système d'authentification, tel que décrit dans US 2005/0075973, si l'on intercepte et manipule les données de la transaction sur le poste de l'utilisateur, on peut présenter des données concernant la transaction à l'utilisateur qui sont différentes aux données présentées au serveur du fournisseur ou de l'autre partie à la transaction, de sorte que l'utilisateur valide une transaction qui est différente de celle qu'il entre dans son système ou qui apparaît sur la confirmation de la transaction.

Pour protéger efficacement les transactions avec un système d'authentification, il est avantageux de lier définitivement le code à usage unique aux détails de la transaction de manière à ôter toute possibilité à un intermédiaire ou à un cheval de Troie d'utiliser ce code pour une autre transaction. De telles solutions sont décrites dans US 2002/0198848 et US 2002/0080183. Pour lier les détails de la transaction au code à usage unique, ces solutions génèrent le second sur la base du premier selon l'un ou l'autre des deux procédés suivants : soit un logiciel spécial récupère les données de la transaction depuis le navigateur de l'utilisateur, soit l'utilisateur saisit à nouveau les détails de la transaction dans un calculateur logiciel ou matériel indépendant. La première solution ne protège toujours pas contre l'interception et l'altération des détails de la transaction dans le navigateur avant la récupération par le logiciel spécial. Les calculateurs seuls sont résistants à de tels chevaux de Troie du moins tant qu'ils restent totalement indépendants du navigateur, i.e. tant que l'utilisateur saisit à nouveau intégralement les détails de la transaction dans le calculateur.

Les calculateurs déplorent cependant un certain nombre d'inconvénients qui les rendent peu compatibles avec une utilisation sur un réseau ouvert comme Internet. Les logiciels compliquent sérieusement le déploiement, ne sont accessibles que sur le poste où ils sont installés et sont sensibles aux attaques du poste de l'utilisateur. Les calculateurs matériels sont onéreux, sont peu pratiques à transporter sur soi et sont peu flexibles en cas de modification des détails de la transaction. Tous les calculateurs sont fastidieux pour l'utilisateur qui doit saisir deux fois les détails de la transaction sous peine d'être vulnérables aux chevaux de Troie autrement. Ils sont inadaptés pour des transactions compliquées ou multiples.

Au vu de ce qui précède, un but de l'invention est de fournir un procédé de sécurisation de transactions électroniques sur un réseau ouvert, tel qu'Internet, qui permet de garantir l'authenticité et l'intégrité d'une transaction sans nécessiter d'opérations fastidieuses tout en offrant à l'utilisateur mobilité et simplicité, et au fournisseur flexibilité et faibles coûts.

En particulier, il est avantageux de fournir un procédé de sécurisation de transactions électroniques permettant l'exécution des transactions par un utilisateur à partir d'un simple poste utilisateur, sans configuration spécifique de ce poste, notamment pour permettre l'exécution de transactions sur la majorité des postes depuis n'importe quel endroit.

Il est avantageux d'assurer l'authenticité et l'intégrité de transactions en ligne à partir de postes qui ne sont pas nécessairement bien sécurisés et qui pourraient par exemple contenir des programmes du type "cheval de Troie" manipulant les données entre les interfaces utilisateur tels que l'écran et le clavier du poste et le programme navigateur de réseau.

L'invention vise également à fournir un procédé de sécurisation de transactions électroniques sur un réseau ouvert, générant un reçu qui soit utilisable comme preuve non-répudiable de la transaction.

Des buts de l'invention ont été réalisés par le procédé selon la revendication 1.

Dans la présente invention, un procédé de sécurisation d'une transaction électronique comprend la génération d'un défi personnel par un système d'authentification du système serveur sécurisé, attendant une réponse unique d'un utilisateur comme preuve de son identité, l'intégration du défi personnel et des données de la transaction dans un reçu sécurisé garantissant l'authenticité et l'intégrité des données qu'il contient par l'utilisateur, et l'association de la réponse au défi avec le défi et la transaction.

Le reçu peut être sécurisé en générant un contrôle d'intégrité visuel sous la forme d'une image personnelle communiquée ou choisie de manière confidentielle, antérieurement à la transaction, et tramée avec des détails de la transaction et/ou du défi. Le reçu peut également ou alternativement être sécurisé par une signature digitale contenant les détails de la transaction et/ou du défi.

Le reçu est de préférence généré dans un format de document, par exemple de type PDF, permettant la visualisation du contenu et la validation de la signature dans un logiciel navigateur conventionnel.

L'invention permet aussi de générer, au moyen du reçu, une preuve non répudiable de la transaction en fournissant une infrastructure à clé publique (PKI) centralisée contenant des clés privées et des certificats des utilisateurs. La PKI est connectée de manière sécurisée a un moteur de génération des reçus n'acceptant de crypter un Hash du reçu avec la clé privée de l'utilisateur qu'en échange d'une réponse correcte au défi.

Selon une forme d'exécution de l'invention, un procédé de sécurisation de transactions électroniques entre un poste utilisateur muni d'un programme navigateur de réseau, et un système serveur sécurisé d'une ou plusieurs contreparties à la transaction, comprend les étapes de :

- soumission de l'ordre de transaction par l'utilisateur au système de serveur sécurisé ;

- génération dans le système serveur sécurisé d'un reçu visualisable sur le poste utilisateur, intégrant des données de la transaction ainsi qu'un défi indissociable de la transaction ;

- sécurisation visuelle et/ou signature électronique du reçu dans le système serveur sécurisé pour lier définitivement le code à usage unique aux détails de la transaction;

- envoi du reçu visualisable et d'un formulaire ou champ de réponse au défi au poste de l'utilisateur ; et

- vérification dans le système serveur sécurisé de la réponse au défi retournée par l'utilisateur.

L'utilisateur valide donc la transaction en envoyant la réponse au défi, qu'il lit d'une simple carte à grille ou en manipulant un calculateur électronique.

La génération d'un reçu signé électroniquement, intégrant les données de la transaction et le défi, empêche un intermédiaire de manipuler les données de la transaction sans invalider celle-ci. En effet, un intermédiaire ne pourra pas modifier ni substituer le reçu pour approbation sans que cela ne puisse être détecté par l'utilisateur, ce dernier pouvant vérifier la signature du reçu retourné. D'autre part, un intermédiaire ne pourra pas séparer le défi du reçu et donc des données de la transaction, permettant ainsi à la contrepartie de s'assurer que la réponse de l'utilisateur au défi correspond effectivement à son approbation de la transaction demandée.

Le même but peut être atteint ou renforcé par l'intégration de sécurité visuelle dans le reçu. En effet, le reçu peut avantageusement comprendre une partie d'image tramée avec des informations sur la transaction et/ou sur l'utilisateur et/ou sur le défi pour permettre un contrôle visuel supplémentaire de l'authenticité du reçu. L'utilisation d'images personnelles et confidentielles qui n'est pas échangé au moment de la transaction, comme une photo d'identité, complique de manière notoire la substitution ou l'altération du reçu. Pour créer une image tramée il est effectivement nécessaire de posséder l'image originale.

Le système informatique pour la mise en oeuvre du procédé selon l'invention, comprend, sous forme logicielle et/ou matérielle, une application 31 apte à présenter un processus métier à l'utilisateur dans une série de pages et de formulaires Web, un moteur défi-réponse 35 apte à générer des défis personnels et à valider les réponses, un moteur de contrôle visuel 33 apte à implémenter la génération des contrôles d'intégrité visuel ou une PKI 34 apte à signer électroniquement le reçu, et un moteur de reçu 32 communiquant avec les moteurs et application précités et apte à générer des reçus comprenant des détails de la transaction et du défi.

D'autres buts et caractéristiques avantageuses de l'invention ressortiront des revendications, de la description détaillée et des dessins annexés, dans lesquels:

- la Fig. 1 est un diagramme de séquence démontrant la nécessité de lier les détails de la transaction au code d'authentification à usage unique dans le but de protéger une transaction contre un cheval de Troie ;

- la Fig. 2 est un diagramme de séquence démontrant la nécessité de lier les détails de la transaction au code d'authentification à usage unique même lorsque un reçu avec les détails de la transaction peut être affiché de manière sécurisée à l'utilisateur ;

- la Fig. 3 est un diagramme de séquence présentant la parade consistant à générer le code à usage unique à partir des détails de la transaction à l'aide d'un calculateur ;

- la Fig. 4 est un diagramme de séquence présentant la parade consistant à envoyer le code à usage unique avec les des détails de la transaction par un canal distinct ;

- la Fig. 5 est un diagramme de séquence illustrant le principe de l'invention, à savoir l'association définitive entre les détails de la transaction et le défi à usage unique fournit par un système d'authentification basé défi-réponse ;

- la Fig. 6 est un diagramme de séquence illustrant la parade mise en oeuvre avec l'invention ;

- la Fig. 7 est un diagramme illustrant les étapes de validation d'une transaction selon un exemple de l'invention;

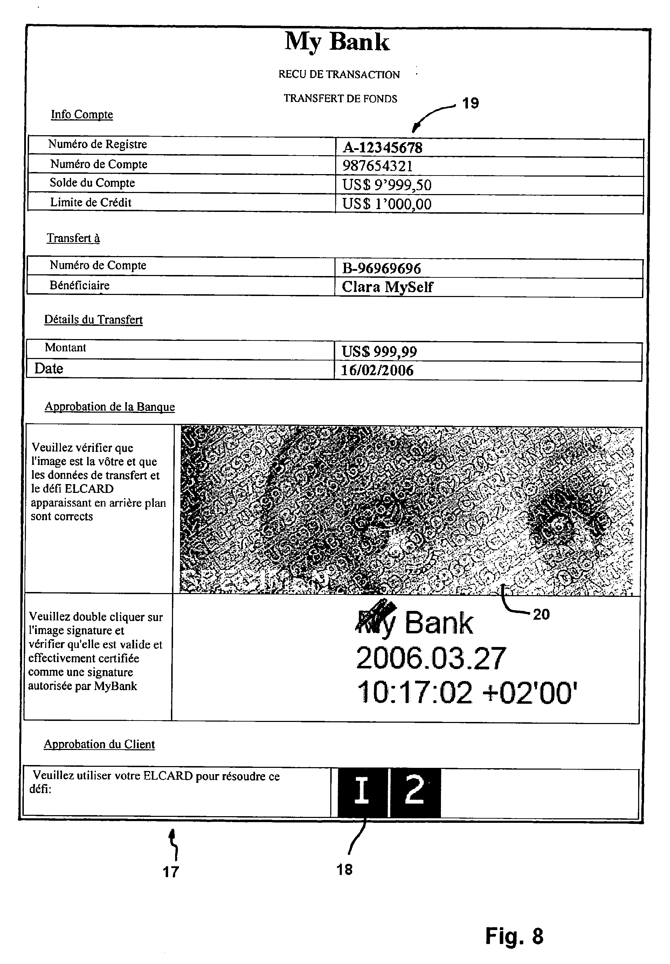

- la Fig. 8 est un exemple de reçu confirmant une transaction bancaire selon un exemple de l'invention ;

- La Fig. 9 est un diagramme illustrant les composants techniques à mettre en oeuvre ainsi que leurs interactions pour implémenter une forme d'exécution de l'invention ;

- La Fig. 10 est un diagramme de séquence détaillant les interactions entre le composant générant le reçu et le système d'authentification basé défi-réponse pour associer la réponse unique à la bonne transaction et au bon défi ;

- La Fig. 11 est un diagramme illustrant les composants techniques à mettre en oeuvre ainsi que leurs interactions pour implémenter la génération d'un reçu non répudiable selon une forme d'exécution de l'invention.

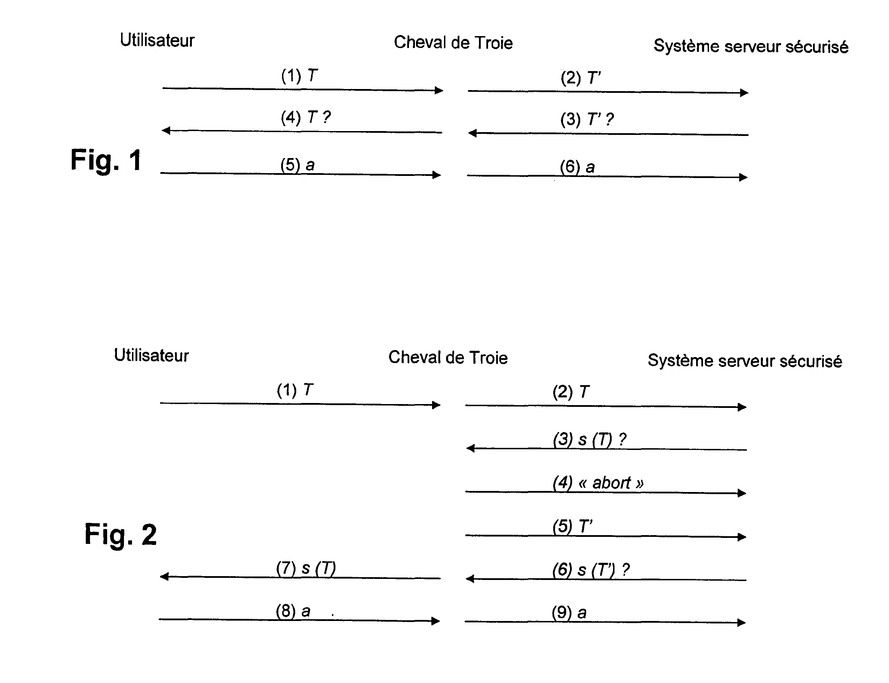

Dans les figures, les numéros entre parenthèses indiquent simplement la séquence des événements illustrés dans la figure respective et ne sont pas à confondre avec les numéros de référence sans parenthèses.
Le procédé classique de signature de transaction électronique, où le code à usage unique n'est pas lié aux détails de la transaction, ne protège pas contre un cheval de Troie qui manipule des données envoyées et affichées par le navigateur. La Fig. 1 détaille la vulnérabilité du procédé. Un utilisateur rentre les détails d'une transaction *T* dans son navigateur (1). Le cheval de Troie intercepte *T* et soumet sa propre transaction *T'* au système serveur sécurisé (2). Le système serveur sécurisé retourne un reçu avec les détails de *T* pour approbation par l'utilisateur (3). Encore une fois, le cheval de Troie intercepte le reçu *T* et affiche à la place un reçu de *T* dans le navigateur (4). Inconscient de la supercherie, l'utilisateur valide sa transaction *T* avec un code à usage unique *a* (5). Le cheval de Troie peut réutiliser a pour *T'*, car *a* n'est pas lié à *T* (6).

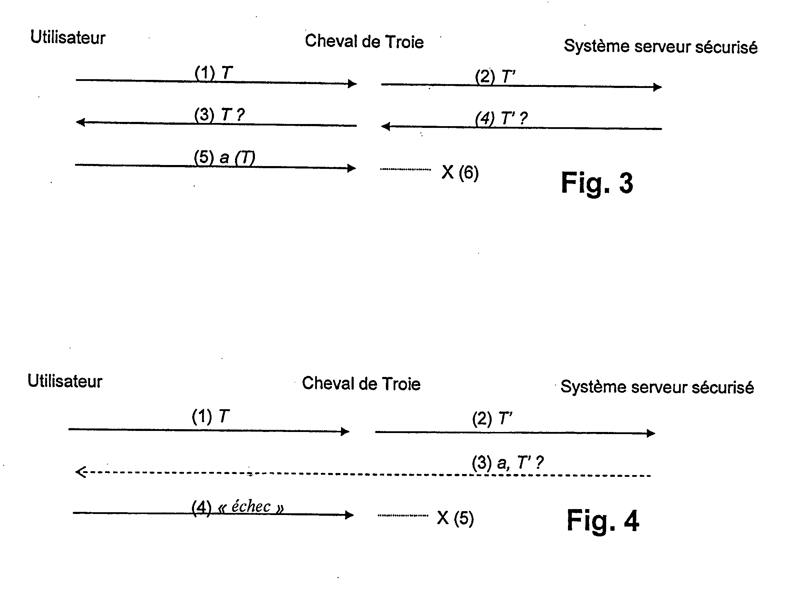

La Fig. 2 démontre que le problème n'est pas résolu si le reçu peut être protégé contre la modification. Dans ce cas, le cheval de Troie n'a qu'à laisser passer la transaction *T* (2), puis lorsqu'il reçoit la demande de confirmation avec le reçu sécurisé *s (T)* de *T* (3) il annule *T* (4) et soumet sa propre transaction *T'* (5). Ayant conservé le reçu *s (T),* il peut afficher ce reçu à l'utilisateur dans le navigateur (7) avant ou après avoir obtenu le reçu *s (T')* à confirmer pour *T* (6). L'utilisateur est toujours inconscient de la supercherie et le code d'approbation *a* qu'il rentre dans son navigateur (8) est en fait utilisé par le cheval de Troie pour confirmer la transaction *T'* (9).
La vulnérabilité présentée dans la Fig. 1 et la Fig. 2 vient de la dissociation entre les détails de la transaction *T* et le code d'authentification à usage unique *a*. Seules des solutions capables de définitivement lier *T* à *a* sont susceptibles de résoudre le problème. La Fig. 3 illustre la solution consistant à générer le code à usage unique à partir des détails de la transaction. Remplacer *T* par *T'* (étapes 1 à 4) n'est plus d'aucune utilité dans cette solution car le code a *(T)* généré par l'utilisateur à partir de *T* ne peut plus être associé à *T'*. De la même façon, la Fig. 4 explique la résistance de la solution consistant à envoyer les détails de la transaction avec le code à usage unique par un canal distinct. Dans ce cas, le cheval de Troie n'est plus capable d'intercepter le reçu et donc, le remplacement de *T* par *T'* (1 et 2) sera visible pour l'utilisateur (3) qui n'aura plus qu'à annuler la transaction (4).

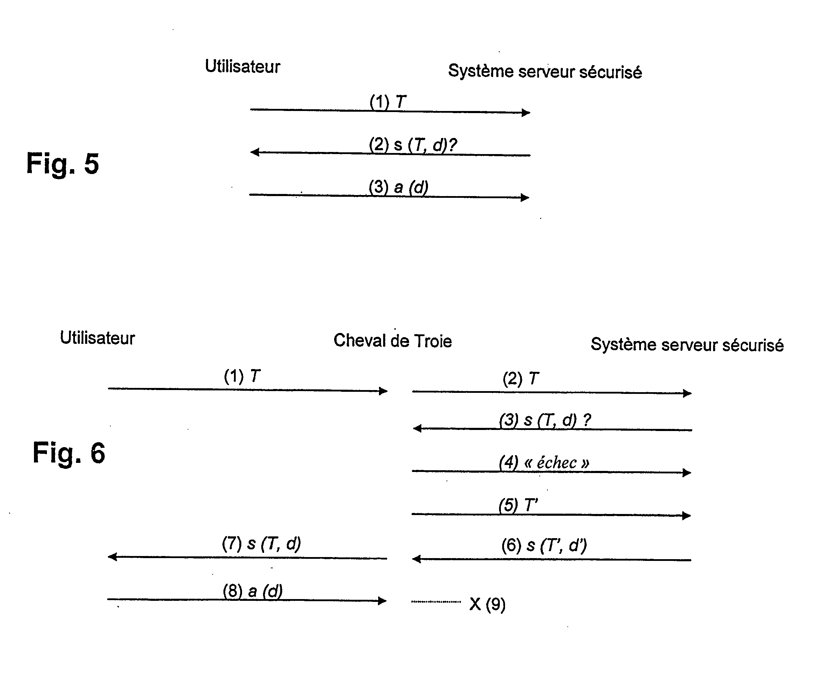

La Fig. 5 montre comment l'invention tire avantage des systèmes d'authentification basés défi-réponse pour associer de manière définitive le code d'authentification à usage unique aux détails de la transaction. Le principe consiste à générer un reçu qui lie définitivement les détails de la transaction à un défi, lui-même lié par le mécanisme de défi-réponse de manière unique à une réponse donnant le code à usage unique. L'utilisateur soumet les détails de sa transaction *T* (1). Le système serveur sécurisé lui retourne un reçu sécurisé avec les détails de la transaction *T* et le défi *d* à résoudre en guise d'approbation (2). L'utilisateur approuve avec la réponse unique au défi *a (d)* (3). Comme *d* est définitivement lié à *T* par *s (T, d)* et pour autant que *a (d)* soit unique, *a (d)* est définitivement lié à *T.*
La Fig. 6 montre comment le fait d'avoir inclus le défi dans le reçu sécurisé protège du détournement par cheval de Troie réalisé à la manière de la Fig. 2. Le cheval de Troie ne peut pas utiliser le défi *d* retourné dans un reçu sécurisé *s (T, d)* par le serveur sécurisé pour la transaction légitime *T* (1 à 3). S'il soumet sa propre transaction *T'* (4 et 5), il recevra un nouveau défi *d'* dans un reçu sécurisé *s (T, d')* (6). Pour autant que la sécurité du reçu soit suffisante pour permettre à l'utilisateur d'en vérifier l'authenticité et l'intégrité, le cheval de Troie ne peut pas afficher un faux reçu *s' (T, d')* à l'utilisateur sans être démasqué. Il peut afficher aussi *s (T', d')* mais sera à nouveau démasqué en révélant la forfaiture *T'* à l'utilisateur. Il ne peut qu'afficher *s (T, d)* (7) dont la réponse *a (d)* (8) ne lui est cependant d'aucune utilité (9).

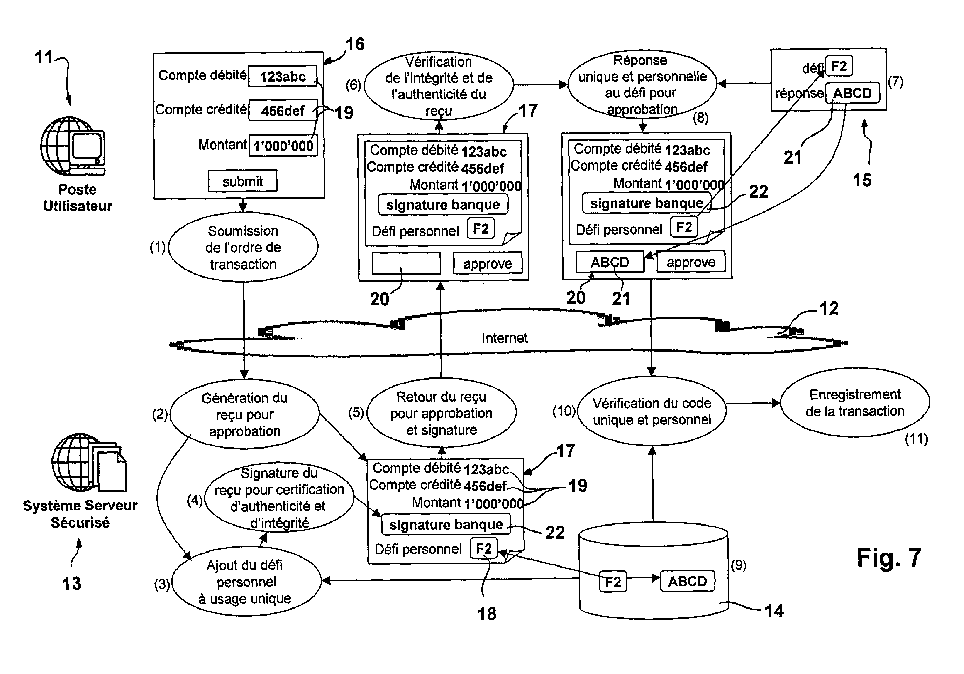

La Fig. 7 illustre les étapes d'un procédé selon l'invention pour effectuer un virement bancaire. Ce procédé est toutefois applicable à d'autres types de transactions où les données peuvent être résumées sur un formulaire tels que les ordres de vente et d'achat de biens ou de services, la confirmation de commandes ou l'établissement de contrats.

Un utilisateur muni d'un ordinateur ayant un logiciel de communication sur un réseau informatique, notamment un navigateur pour la navigation sur Internet, formant un poste utilisateur 11, communique sur un réseau global ouvert 12 tel qu'Internet, avec un système serveur sécurisé 13. Par système serveur sécurisé, on entend une ou plusieurs machines serveurs protégées par des pare-feu et d'autres moyens de protection connus, sur un site ou distribués sur plusieurs sites. Le système serveur comprend un système d'authentification 14 qui génère des défis et valide des réponses. Le système serveur comprend en outre un système de génération de documents, par exemple de documents du type PDF, et optionnellement, un système d'insertion de contrôle d'intégrité visuelle telle qu'un programme pour la génération d'images tramées ou cryptées visuellement. Les procédés de génération d'images tramées ou de cryptographie visuelle sont connus et décrits par exemple dans les documents WO 03/006257, EP 1554700, US 6249588 et US 5,488,864.

Le système serveur sécurisé comprend également un système de signature électronique de documents, basé sur une infrastructure à clé publique PKI (Public Key Infrastructure).

Le navigateur du poste utilisateur peut être par exemple une version récente du navigateur Internet Explorer ™ de Microsoft, lui-même incluant d'autres logiciels tels que Acrobat Reader ™ de la société Adobe, permettant de visualiser les documents générés par le système serveur sécurisé et de vérifier leurs signatures électroniques.

L'utilisateur reçoit un générateur de réponses 15 sous forme d'un équipement personnel permettant de générer la réponse au défi, tel qu'une carte à grille ou un calculateur générant des codes électroniquement, les données permettant de valider les réponses aux défis étant également stockées dans le système serveur sécurisé.

Dans l'exemple d'une transaction bancaire effectuée via Internet illustrée dans la Fig. 7, l'utilisateur se connecte sur le site Internet de la banque, formant l'interface du système serveur sécurisé avec l'Internet. Le poste utilisateur peut être un PC doté d'un navigateur Internet, tel qu'Internet Explorer de Microsoft, muni d'un programme de lecture de documents PDF ou autre document pouvant être signé électroniquement.

L'utilisateur s'identifie auprès du site Internet de la banque avec des moyens d'authentification définis par la banque qui sont connus en soi.

Bien que cela ne soit pas nécessaire pour l'invention, on peut supposer que, comme pour tous les échanges entre un utilisateur et sa banque, les données échangées, à partir de l'authentification initiale de l'utilisateur, sont cryptées et protégées, par exemple en utilisant le mode de communication SSL (Secure Socket Layer).

Pour envoyer sa requête, l'utilisateur remplit un formulaire 16 à disposition sur le site Internet avec les données de la transaction 21 et envoie ensuite sa requête au site Internet de la banque. Alternativement, l'utilisateur peut envoyer un ordre de transaction sur un formulaire pré-rempli à disposition sur son poste.

A la réception de l'ordre de transaction, le système serveur sécurisé génère un reçu 17 dans un format visualisable sur écran, résumant les données de la transaction 19 et comprenant un défi 18 fourni par le serveur d'authentification 14. La réponse au défi 15 est à usage unique et associée de manière définitive aux données de la transaction dans le serveur d'authentification. L'association entre le la réponse au défi et les données de la transaction est réalisée par le biais du reçu qui englobe le défi et les détails de la transaction dans une structure sécurisée dont l'authenticité et l'intégrité peuvent être vérifiée visuellement par l'utilisateur empêchant toute manipulation du reçu par un intermédiaire. L'association entre le reçu et la réponse au défi dépend du principe de fonctionnement du système d'authentification. Elle peut par exemple être accomplie en générant un code de transaction unique chiffré à partir des données du défi, et/ou de sa réponse, et/ou des données de la transaction telles que le montant, la date, le numéro de compte du débiteur et du bénéficiaire, le numéro de transaction. Cette clé de transaction peut être, de surcroît, chiffrée avec une clé partagée avec le système d'authentification du système serveur sécurisé.

Le reçu est de préférence généré dans un format du type PDF ou un autre format répandu et il peut être signé électroniquement afin d'en garantir l'authenticité et l'intégrité ainsi que la possibilité de lecture par l'utilisateur sur son poste au moyen de son logiciel navigateur. La signature portant sur l'intégralité du document, elle garantit l'authenticité et l'intégrité des détails de la transaction ainsi que du défi personnel intégré. Cette signature peut par ailleurs former la clé de transaction unique décrite précédemment.

Alternativement ou complémentairement à la signature électronique, le reçu peut encore comporter des contrôles d'intégrité visuels, tels qu'une partie tramée 20, ou cryptée visuellement selon des techniques connues. Les données spécifiques à l'utilisateur, à la transaction et/ou au défi peuvent avantageusement être intégrées dans une image tramée, elle-même spécifique à l'utilisateur et choisie avant la transaction, afin de la rendre unique et difficilement falsifiable, tout en permettant un contrôle visuel très rapide par l'utilisateur.

Le reçu est ensuite envoyé à l'utilisateur via la communication sécurisée établie entre l'utilisateur et le site Internet de la banque, et affiché dans le navigateur de l'utilisateur accompagné d'un champ ou formulaire d'approbation 20.

L'utilisateur doit ensuite parcourir le reçu visuellement et vérifier que les données de la transaction sont correctes, le cas échéant, que la partie d'image tramée comprend les données attendues (données de la transaction et/ou du défi et/ou des données personnelles) et, le cas échéant, que la signature électronique est valide et que le certificat digital associé, typiquement au format X509, est bien celui de la banque. Si l'utilisateur approuve les données présentes sur le reçu, il donne son approbation à la transaction en entrant la réponse 21 au défi dans le champ d'approbation du reçu ou du formulaire. L'utilisateur génère la réponse au défi au moyen de son générateur de réponses personnel 15. L'utilisateur approuve donc le reçu en soumettant un formulaire d'approbation avec sa réponse, ou en retournant le reçu avec le champ d'approbation, de sorte que la signature 22 dans le reçu de transaction ainsi que la réponse au défi puissent être vérifiées par le système d'authentification du système sécurisé, ou par un autre serveur du système serveur sécurisé où les données de la transaction sont stockées.

Si la réponse au défi est correcte, la transaction est validée.

Ce procédé sécurise la transaction contre l'interception et la modification à la volée des données pour l'une ou plusieurs des raisons suivantes :

- les données de la transaction ne peuvent pas être modifiées sans que la forfaiture ne soit visible dans le reçu généré par le système serveur sécurisé,

- le reçu ne peut pas être modifié ou remplacé à la volée car son authenticité et son intégrité sont protégées par la signature électronique et/ou par des contrôles d'intégrité visuels,

- le reçu ne peut-être approuvé que par l'utilisateur qui a forcément visualisé le reçu et qui possède la réponse au défi,

- modifier la réponse au défi à la volée n'a aucun intérêt sauf de provoquer l'échec de la transaction,

- la réponse au défi étant unique et le défi étant indissociable du reçu, ils ne peuvent pas être réutilisés pour une autre transaction.

De plus, ce procédé peut facilement être étendu pour offrir une preuve non-répudiable de la transaction du fait que :

- le reçu retourné à l'utilisateur lui fournit déjà une preuve du contenu de la transaction car le reçu est signé par le système serveur sécurisé,

- une bonne réponse au défi est la preuve que l'utilisateur est le destinataire valide du reçu et qu'il a effectivement ouvert et regardé le document,

- la réponse au défi peut être utilisée pour authentifier l'utilisateur auprès d'une PKI centralisée et obtenir une contre-signature personnelle du reçu,

- le reçu signé par les deux parties offre une preuve non répudiable de la transaction à archiver par les deux parties.

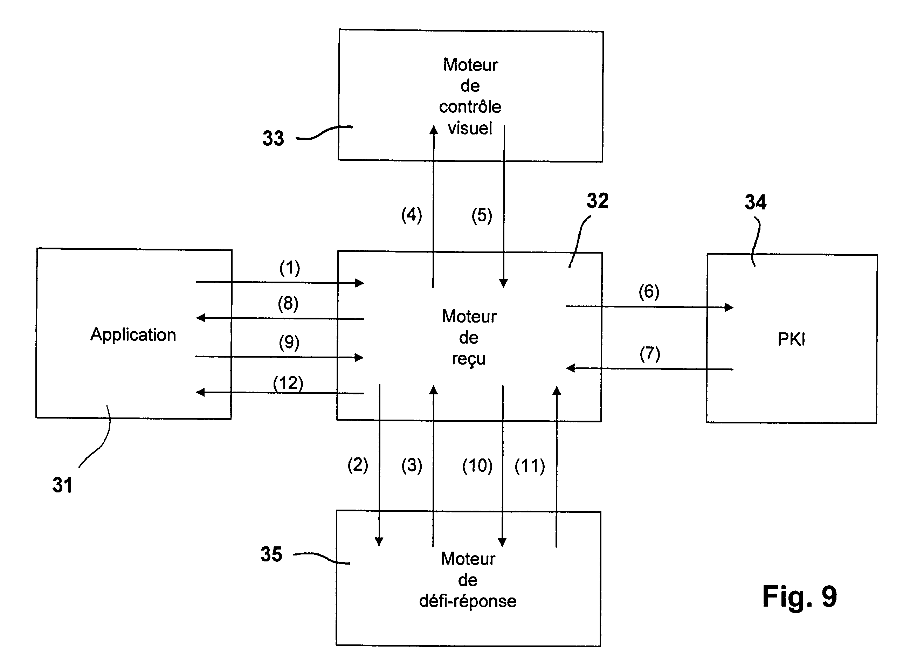

La Fig. 9 présente les différentes briques logicielles et/ou matérielles à assembler dans le but de sécuriser les transactions selon le procédé de génération de reçu de la présente invention.

L'Application 31 présente le processus métier à l'utilisateur dans une série de pages et de formulaires Web. Il s'agit par exemple de l'application de e-Banking de l'exemple illustré précédemment.

Le Moteur de reçu 32 est le composant central qui implémente la revendication de la présente invention, à savoir la génération et l'approbation du reçu.

Le Moteur de contrôle visuel 33 implémente la génération des contrôles d'intégrité visuel. Il s'agit d'une partie optionnelle ou complémentaire à la PKI introduite ci-après.

La PKI 34 désigne le conteneur logiciel ou matériel de la clé privée et du certificat utilisés pour signer électroniquement le reçu. Il peut s'agir d'un conteneur matériel, comme une clé USB ou une smart card, ou d'un « keystore » logiciel tel que celui inclus dans les versions récentes de MS Windows™. Il s'agit d'une partie optionnelle ou complémentaire au Moteur de contrôle visuel introduit ci-avant.

Enfin, le Moteur de défi-réponse 35 est le composant qui génère les défis personnels envoyés à l'utilisateur et qui valide les réponses calculées par ce dernier à l'aide de son générateur mot de passe.

Les cinq composants sont supposés communiquer de manière sécurisée, de telle sorte que toute intrusion entre eux est proscrite. Une telle isolation peut être obtenue de différentes manières et, notamment, en isolant le réseau et par authentification mutuelle des composants.

L'Application 31 reçoit les données de la transaction de l'Internaute. Elle émet la requête de génération du reçu en précisant les données de la transaction ainsi que l'identité de l'utilisateur (1).

Le Moteur de reçu 32 demande un défi - typiquement deux images indiquant une ligne et une colonne dans une carte à grille - au Moteur de défi-réponse 35 en précisant l'identité de l'utilisateur (2) et reçoit le défi en retour (3).

Si l'option « contrôle d'intégrité visuelle » est retenue, le Moteur de reçu 32 transmet les données (4) de la transaction et l'identité de l'utilisateur au Moteur de contrôle visuel 33 puis récupère en échange une ou plusieurs images personnelles, par exemple une photo d'identité précédemment fournie par l'utilisateur, communiquée par l'Application en paramètre, et tramée avec tout ou partie des données de la transaction et le défi (5).

Le Moteur de reçu 32 a alors tous les éléments pour générer la structure et le contenu du document. Sur cette base, si l'option « signature digitale » est retenue, il calcule un Hash (par exemple SHA-1) du document et le transmet pour cryptage à la PKI, par exemple au travers d'une interface PKCS#7 ou MS CryptoAPI, avec les accréditations nécessaires telles que le PIN code de la PKI (6). Ensuite, il crée la signature, par exemple un objet PKCS#7 pour un document de type PDF.

Après que le Moteur de reçu 32 ait, le cas échéant, inséré la signature dans le document, il retourne le reçu à l'Application 31 avec un numéro de ticket unique, par exemple un hash MD5 sur la base d'un nombre aléatoire (8).

L'Application 31 conserve le ticket et transfert le reçu à l'utilisateur pour approbation. Lorsqu'elle reçoit en retour la réponse de l'Internaute, elle la transmet (9) avec le ticket et l'identifiant de l'Internaute au Moteur de reçu qui à son tour la soumet (10) au Moteur de défi-réponse 35 pour validation (11).

Pour terminer, le Moteur de reçu 32 retourne l'ordre de confirmer ou d'invalider la transaction (12) à l'Application 31.

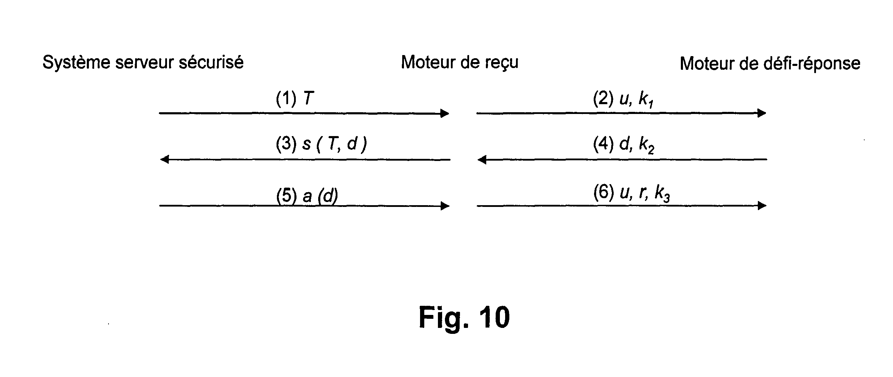

L'objectif est d'empêcher l'utilisation de la réponse au défi pour autre chose que la transaction voulue par l'utilisateur. La Fig. 10 présente les différentes manières d'assurer que la réponse au défi valide effectivement et uniquement la transaction liée au dit défi. L'usage correct de la réponse au défi est garanti par le Moteur de reçu qui gère le lien entre la transaction et le défi. Le Moteur de reçu peut créer une clé unique $k_1$ (2) lorsqu'il reçoit les détails de la transaction $T$ (1), lier la transaction à une clé unique $k_2$ retournée par le Moteur de défi-réponse en même temps que le défi (4), et/ou indiquer au Moteur de défi-réponse par une clé unique $k_3$ le défi auquel correspond la réponse qu'il lui transmet (6). L'utilisation de $k_1$ et/ou $k_2$ et/ou $k_3$ dépend du fonctionnement du Moteur de défi-réponse.

## Cas 1 : $k_1 = k_2 = k_3 = \varnothing$

Il n'est pas nécessaire de gérer explicitement la relation entre la transaction, le défi et sa réponse si les défis et les réponses pour un utilisateur donné sont générés séquentiellement sans risque qu'un autre défi puisse être demandé ou, une réponse proposée, en parallèle par un autre composant que le Moteur de reçu. Dans ce cas la réponse correspond forcément au dernier défi et à la transaction en cours pour l'utilisateur.

## Cas 2 : $k_1 = k_2 = \varnothing$ & $k_3 = k\,(d)$

Une autre manière de lier la réponse, le défi et la transaction repose sur l'hypothèse que le Moteur de défi-réponse valide un couple {défi, réponse} et non la réponse seule.

## Cas 3 : $k_1 = \varnothing$ & $k_2 = k_3 = f\,(d)$

Plutôt que d'utiliser le défi, il est aussi envisageable de tirer partie, le cas échéant, d'une clé de requête que serait capable de fournir le Moteur de défi-réponse en même temps que le défi.

## Cas 4 : $k_1 = k_3 = f\,(T)$

Enfin, la clé réconciliant transaction, défi et réponse peut être calculée par le Moteur de reçu comme une fonction des données de la transaction, puis communiquée au Moteur de défi-réponse avec la demande de défi. Ce procédé nécessite que le Moteur de défi-réponse accepte d'enregistrer une clé de requête communiquée par un système externe.

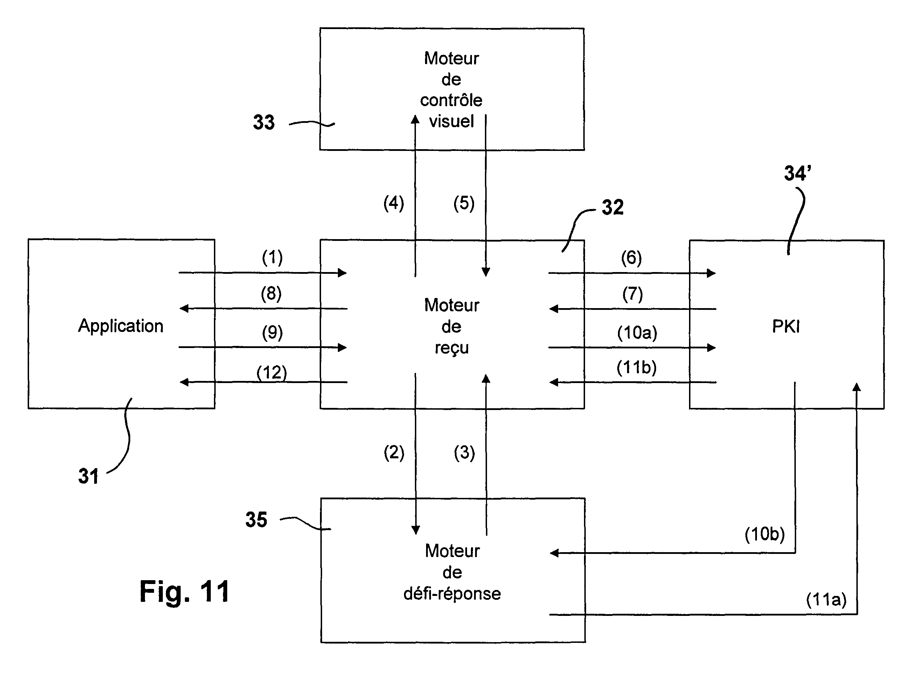

En étendant l'architecture à composants comme illustré en Fig. 11, il est possible, pour autant que la PKI 34' et le Moteur de défi-réponse 35 le permette, d'utiliser la réponse de l'utilisateur pour provoquer la signature électronique du reçu par l'utilisateur et fournir ainsi une preuve non-répudiable de la transaction pour les deux parties. Il suffit pour ce faire de disposer d'une PKI 34' centralisant les clés privées et les certificats des utilisateurs et n'autorisant leur utilisation qu'après une réponse correcte à un défi. Dés lors les étapes (10) et (11) sont modifiées comme suit. Le Moteur de reçu 33 transmet un Hash du reçu soumis à l'utilisateur - i.e., du reçu déjà signé avec la clé privée du fournisseur du système serveur sécurisé - ainsi que l'identité de l'utilisateur et sa réponse au défi en guise d'accréditation (10a). La PKI 34' soumet la réponse au défi au Moteur de défi-réponse 35 avec l'identité de l'utilisateur (10b). Sur approbation (11a) du Moteur de défi-réponse 35, la PKI 34' accepte de crypter le Hash du reçu avec la clé privée de l'utilisateur et retourne le résultat au Moteur de reçu 32. Le dit résultat contient donc les deux signatures du fournisseur et de l'utilisateur sans possibilité de contestation puisque seul le Moteur de reçu 32 en possession des bonnes accréditations a pu le générer.

## Revendications

1. Procédé de sécurisation d'une transaction électronique comprenant :

    - la génération d'un défi personnel par un système d'authentification du système serveur sécurisé, attendant une réponse unique d'un utilisateur comme preuve de son identité ;
- l'intégration du défi personnel et des données de la transaction dans un reçu sécurisé garantissant l'authenticité et l'intégrité des données qu'il contient par l'utilisateur ; et
- l'association de la réponse au défi avec le défi et la transaction.

**2.** Procédé selon la revendication 1 **caractérisé en ce que** le reçu est sécurisé en générant un contrôle d'intégrité visuel sous la forme d'une image personnelle communiquée ou choisie de manière confidentielle, antérieurement à la transaction, et tramée avec des détails de la transaction et/ou du défi.

**3.** Procédé selon la revendication 1 ou 2 **caractérisé en ce que** le reçu est sécurisé par une signature digitale contenant les détails de la transaction et/ou du défi.

**4.** Procédé selon la revendication 1 ou 2 **caractérisé en ce que** le reçu est généré dans un format de document permettant la visualisation du contenu et la validation de la signature par un logiciel navigateur conventionnel.

**5.** Procédé selon l'une des revendications précédentes **caractérisé en ce que** l'on génère au moyen du reçu une preuve non répudiable de la transaction en fournissant une infrastructure à clé publique (PKI) centralisée contenant des clés privées et des certificats des utilisateurs, la PKI étant connectée de manière sécurisée a un moteur de génération des reçus n'acceptant de crypter un Hash du reçu avec la clé privée de l'utilisateur qu'en échange d'une réponse correcte au défi.

**6.** Procédé de sécurisation d'une transaction électronique sur un réseau ouvert tel que l'Internet, entre un poste utilisateur muni d'un logiciel navigateur de réseau et un système serveur sécurisé, comprenant :

- la génération d'un ordre de transaction sur le poste utilisateur et la soumission de l'ordre au système serveur sécurisé ;
- la sécurisation de la transaction par un procédé selon l'une quelconque des revendications précédentes ;
- l'envoi du reçu au poste de l'utilisateur sous une forme visualisable sur le poste utilisateur et d'un formulaire ou champ de réponse au défi; et
- la vérification dans le système serveur sécurisé de la réponse au défi retournée par l'utilisateur.

**7.** Système informatique pour la mise en oeuvre du procédé de sécurisation d'une transaction électronique selon l'une des revendications précédentes, comprenant, dans une partie de réseau ou un serveur sécurisés,

- une application 31 apte à présenter un processus métier à l'utilisateur dans une série de pages et de formulaires Web ;
- un moteur défi-réponse 35 apte à générer des défis personnels et à valider les réponses ;
- un moteur de contrôle visuel 33 apte à implémenter la génération des contrôles d'intégrité visuel ou une PKI 34 apte à signer électroniquement le reçu ;
- un moteur de reçu 32 communiquant avec les moteurs et application précités et apte à générer des reçus comprenant des détails de la transaction et du défi.

EP 1 843 288 A1

Utilisateur    Cheval de Troie    Système serveur sécurisé

(1) $T$ →    (2) $T'$ →

← (4) $T$ ?    ← (3) $T'$ ?

**Fig. 1**    (5) $a$ →    (6) $a$ →


Utilisateur    Cheval de Troie    Système serveur sécurisé

(1) $T$ →    (2) $T$ →

← (3) $s(T)$ ?

(4) « abort » →

**Fig. 2**    (5) $T'$ →

← (7) $s(T)$    ← (6) $s(T')$ ?

(8) $a$ →    (9) $a$ →

Utilisateur            Cheval de Troie            Système serveur sécurisé

(1) $T$                   (2) $T'$

(3) $T$ ?                 (4) $T'$ ?

(5) $a$ ($T$)              X (6)

**Fig. 3**

Utilisateur            Cheval de Troie            Système serveur sécurisé

(1) $T$                   (2) $T'$

(3) $a$, $T'$ ?

(4) « échec »            X (5)

**Fig. 4**

EP 1 843 288 A1

EP 1 843 288 A1

Utilisateur          Système serveur sécurisé

$(1)\ T$

$(2)\ s\ (T,\ d)?$

$(3)\ a\ (d)$

**Fig. 5**

Utilisateur      Cheval de Troie      Système serveur sécurisé

$(1)\ T$        $(2)\ T$

$(3)\ s\ (T,\ d)\ ?$

$(4)$ « échec »

$(5)\ T'$

$(7)\ s\ (T,\ d)$        $(6)\ s\ (T',\ d')$

$(8)\ a\ (d)$      X $(9)$

**Fig. 6**

Fig. 7

# My Bank

RECU DE TRANSACTION

TRANSFERT DE FONDS

19

### Info Compte

| Numéro de Registre | A-12345678 |
|---|---|
| Numéro de Compte | 987654321 |
| Solde du Compte | US$ 9'999,50 |
| Limite de Crédit | US$ 1'000,00 |

### Transfert à

| Numéro de Compte | B-96969696 |
|---|---|
| Bénéficiaire | Clara MySelf |

### Détails du Transfert

| Montant | US$ 999,99 |
|---|---|
| Date | 16/02/2006 |

### Approbation de la Banque

| Veuillez vérifier que l'image est la vôtre et que les données de transfert et le défi ELCARD apparaissant en arrière plan sont corrects | |
|---|---|
| Veuillez double cliquer sur l'image signature et vérifier qu'elle est valide et effectivement certifiée comme une signature autorisée par MyBank | **My Bank** 2006.03.27 10:17:02 +02'00'  20 |

### Approbation du Client

| Veuillez utiliser votre ELCARD pour résoudre ce défi: | **I 2** |
|---|---|

17

18

**Fig. 8**

EP 1 843 288 A1

Moteur
de
contrôle
visuel

**33**

**32**

**34**

Application

(1)

(8)

(9)

(12)

Moteur
de
reçu

(4) (5)

(6)

(7)

PKI

**31**

(2) (3) (10) (11)

**35**

Moteur
de
défi-réponse

**Fig. 9**

Système serveur sécurisé          Moteur de reçu          Moteur de défi-réponse

$(1)\ T$ →

$(2)\ u,\ k_1$ →

$(3)\ s\ (\ T,\ d\ )$ ←

$(4)\ d,\ k_2$ ←

$(5)\ a\ (d)$ →

$(6)\ u,\ r,\ k_3$ →

# Fig. 10

EP 1 843 288 A1

Fig. 11

**Office européen des brevets**

**RAPPORT DE RECHERCHE EUROPEENNE**

Numéro de la demande

EP 06 40 5145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br>Y | US 2003/055738 A1 (ALIE CLAUDE)<br>20 mars 2003 (2003-03-20)<br><br>* abrégé *<br>* alinéas [0048] - [0051]; figure 2 *<br>* alinéas [0059], [0065]; figures 6,9 *<br>----- | 1,3-7<br><br>2 | INV.<br>G06Q20/00 |
| Y | EP 1 577 847 A (ELCA INFORMATIQUE S.A)<br>21 septembre 2005 (2005-09-21)<br>* abrégé *<br>* alinéas [0008] - [0013] *<br>* alinéas [0022] - [0026]; figures 1,2 *<br>----- | 2 | |
| X | MAO W: "ON TWO PROPOSALS FOR ON-LINE BANKCARD PAYMENTS USING OPEN NETWORKS:PROBLEMS AND SOLUTIONS"<br>PROCEEDINGS IEEE SYMPOSIUM ON SECURITY AND PRIVACY, XX, XX, 6 mai 1996 (1996-05-06), pages 201-210, XP000600082<br>* le document en entier *<br>----- | 1,3-7 | |
| A | US 2004/177047 A1 (GRAVES MICHAEL E ET AL)<br>9 septembre 2004 (2004-09-09)<br>* abrégé *<br>* alinéa [0037]; figures 2,3 *<br>----- | 1,7 | **DOMAINES TECHNIQUES RECHERCHES (IPC)**<br><br>G06F<br>H04L<br>G07F |
| A | US 2003/158960 A1 (ENGBERG STEPHAN J)<br>21 août 2003 (2003-08-21)<br>* abrégé *<br>* alinéas [0230] - [0245] *<br>----- | 1,7 | |
| A | US 2002/095388 A1 (YU HONG HEATHER ET AL)<br>18 juillet 2002 (2002-07-18)<br>* abrégé *<br>* alinéa [0008] *<br>-----<br><br>-/-- | 2 | |

Le présent rapport a été établi pour toutes les revendications

| Lieu de la recherche | Date d'achèvement de la recherche | Examinateur |
|---|---|---|
| Munich | 18 juillet 2006 | Dedek, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 06 40 5145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2004/063993 A (ELCA INFORMATIQUE S.A; GOROSTIDI, DANIEL; CARACCIA, MURIEL; FRIDEN, CH) 29 juillet 2004 (2004-07-29) * abrégé * * page 4, ligne 1-25 * ----- | 2 | |
| D,A | WO 03/006257 A (ECOLE POLYTECHNIQUE FEDERALE DE LAUSANNE; HERSCH, ROGER, DAVID; WITTWE) 23 janvier 2003 (2003-01-23) * abrégé * ----- | 2 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 18 juillet 2006 | Dedek, F |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 06 40 5145

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-07-2006

| Document brevet cité au rapport de recherche | | Date de publication | Membre(s) de la famille de brevet(s) | | Date de publication |
|---|---|---|---|---|---|
| US 2003055738 | A1 | 20-03-2003 | AUCUN | | |
| EP 1577847 | A | 21-09-2005 | WO | 2005091232 A1 | 29-09-2005 |
| US 2004177047 | A1 | 09-09-2004 | ZA | 200208366 A | 17-07-2003 |
| US 2003158960 | A1 | 21-08-2003 | AUCUN | | |
| US 2002095388 | A1 | 18-07-2002 | AUCUN | | |
| WO 2004063993 | A | 29-07-2004 | AUCUN | | |
| WO 03006257 | A | 23-01-2003 | CA | 2453456 A1 | 23-01-2003 |
| | | | CN | 1646330 A | 27-07-2005 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005075973 A
- US 2004059952 A
- EP 1338940 A
- US 2001044896 A
- US 5060263 A
- GB 2120434 A
- US 2005246524 A

- US 20050075973 A
- US 20020198848 A
- US 20020080183 A
- WO 03006257 A
- EP 1554700 A
- US 6249588 B
- US 5488864 A